## Europäisches Patentamt

## European Patent Office

## Office européen des brevets

(19)

(11) Veröffentlichungsnummer: **0 086 735**
**B1**

(12) # EUROPÄISCHE PATENTSCHRIFT

(45) Veröffentlichungstag der Patentschrift:
**13.08.86**

(51) Int. Cl.⁴: **B 65 G 51/24,** B 65 G 51/34

(21) Anmeldenummer: **83730007.8**

(22) Anmeldetag: **18.01.83**

(54) **Rohrpostanlage mit mehreren im Einrohr-Wendebetrieb befahrenen Fahrrohrsträngen und der Verbindung jeweils zweier Fahrrohrstränge dienenden Verbindungseinrichtungen.**

(30) Priorität: **17.02.82 DE 3206075**

(43) Veröffentlichungstag der Anmeldung:
**24.08.83 Patentblatt 83/34**

(45) Bekanntmachung des Hinweises auf die Patenterteilung:
**13.08.86 Patentblatt 86/33**

(84) Benannte Vertragsstaaten:
**AT CH DE FR GB IT LI NL SE**

(56) Entgegenhaltungen:
**DE-A-1 907 812**
**DE-A-2 400 131**
**DE-A-2 618 407**
**FR-A-2 189 288**
**FR-A-2 371 362**

(73) Patentinhaber: **Siemens Aktiengesellschaft Berlin und München, Wittelsbacherplatz 2, D-8000 München 2 (DE)**

(72) Erfinder: **Kardinal, Hans-Joachim, Ing. grad., Am Waldhaus 27, D-1000 Berlin 38 (DE)**

LIBER, STOCKHOLM 1986

EP 0 086 735 B1

## Beschreibung

Die Erfindung betrifft eine Rohrpostanlage mit mehreren im Einrohr-Wendebetrieb befahrenen Fahrrohrsträngen und der wahlweisen Verbindung jeweils zweier Fahrrohrstränge dienenden Verbindungseinrichtungen mit jeweils zwei mit einer beidseitig offenen lageveränderbaren Rohrhülse fluchtend in jeweils einen der beiden Fahrrohrstränge eingefügten Rohrpoststationen, deren Rohrhülse jeweils mit einer parallel zu ihr ausgerichteten Rohrempfangskammer mechanisch verbunden ist, die zur Aufnahme einer überführten Rohrpostbüchse in die Flucht eines Rohrstutzens und zur Einschleusung dieser Rohrpostbüchse in den entsprechenden Fahrrohrstrang in die Flucht desselben einfahrbar ist.

Bei einer - aus der DE-A- 26 18 407 - bekannten derartigen Rohrpostanlage sind die beiden Rohrpoststationen jeder Verbindungseinrichtung durch Rohrpoststationen mit einem sowohl in die Flucht einer Eingabeöffnung als auch eines an die Rohrpoststation angeschlossenen Fahrrohres stellbaren Sendespeicher gebildet, wobei der die Eingabeöffnung bildende Rohrstutzen mit einem zum jeweils anderen Fahrrohrstrang führenden Verbindungsstrang verbunden ist. Der Verbindungsstrang muß dabei entweder über eine Weiche in den anderen Fahrrohrstrang eingefügt werden oder wird so geführt, daß er jeweils den Endbereich des jeweils anderen Fahrrohrstranges darstellt. Der Verbindungsstrang muß mit wenigstens einer Rohrverschlußeinrichtung ausgestattet sein, die zur pneumatischen Trennung des jeweiligen Fahrrohrstranges von der in den anderen Fahrrohrstrang eingefügten Übergabestation den lichten Querschnitt des Verbindungsstrangs völlig verschließen und zur Übergabe von Rohrpostbüchsen völlig freigeben muß. Als solche Rohrverschlußeinrichtungen werden üblicherweise sogenannte Schieber, d. h. elektromagnetisch antreibbare Verschlußplatten eingesetzt.

Die der Erfindung zugrunde liegende Aufgabe besteht darin, auch ohne die Verwendung von Verbindungsweichen eine völlige Freizügigkeit bezüglich der Lage und Anordnung der beiden Rohrpoststationen der Verbindungseinrichtungen zu ermöglichen. Dies wird dadurch erreicht, daß die beiden Rohrstutzen der einander zugeordneten Rohrpoststationen mittels eines Verbindungsrohres miteinander verbunden sind, daß die Rohrempfangskammer in ihrem vom Rohrstutzen abgewandten Endbereich eine Sperrvorrichtung aufweist, daß die Rohrempfangskammer wenigstens einer der beiden einander zugeordneten Rohrpoststationen mittels einer ein schaltbares Ventil aufweise den Zuleitung mit dem zugehörigen Fahrrohrstrang verbindbar ist und daß zur Überleitung bestimmte Rohrpostbüchsen nach Einfahren der Rohrempfangskammer in die Flucht des Fahrrohrstranges mittels einer zumindest einen Teilbereich der Rohrempfangskammer einbeziehenden Luftströmung an die Sperrvorrichtung herangeführt, sowie nach Rückkehr der Rohrempfangskammer in ihre Ausgangslage in das Verbindungsrohr überführt werden.

Die Einbaulage der beiden Rohrpoststationen ist völlig beliebig; damit ist mit einfachen Mitteln eine totale Freizügigkeit bezüglich der Lage und der Anordnung der beiden eine Verbindungseinrichtung bildenden Rohrpoststationen gegeben. Im Gegensatz zu der bekannten Rohrpostanlage benötigt die erfindungsgemäße Rohrpostanlage keine aufwendigen steuerbaren Rohrverschlußeinrichtungen in den Verbindungssträngen zur pneumatischen Abtrennung des einen Fahrrohrstranges von dem anderen, sondern lediglich ein Schaltventil an einer Zuleitung zum jeweiligen Fahrrohrstrang.

Die für den Transport der Rohrpostbüchsen zwischen den beiden Empfangsrohrkammern der beiden Rohrpoststationen einer Verbindungseinrichtung notwendige Luftströmung kann auf verschiedene Weise realisiert werden. Gemeinsam ist allen diesen Varianten, daß bei wenigstens einer der beiden Rohrpoststationen die Empfangsrohrkammer im Bereich des die Sperrvorrichtung aufweisenden Endes mittels einer ein schaltbares Ventil aufweisen Zuleitung mit dem zugehörigen Fahrrohrstrangbereich verbunden ist. Sofern nur die Empfangsrohrkammer der einen Rohrpoststation mit dem zugehörigen Fahrrohrstrangbereich verbunden ist, weist die Empfangsrohrkammer der jeweils anderen Rohrpoststation in ihrer mit dem verbindenden Rohrstutzen fluchtenden Lage einen Zugang zur Außenluft auf. Der für den Übergabetransport notwendige Luftstrom wird dann aus dem einen Fahrrohrstrang über das Ventil und die Zuleitung durch beide Empfangsrohrkammern bis zur Außenluft geleitet; da jeder der beiden miteinander zu verbindenden Fahrrohrstränge voraussetzungsgemäß im Einrohr-Wendebertieb zu befahren ist, sind beide möglichen Richtungen dieses Förderluftstroms herstellbar.

Sofern beide Rohrpoststationen einer Verbindungseinrichtung zumindest annähernd vertikal ausgerichtet sind, kann der Übergabetransport zu einer Rohrpoststation, deren Empfangsrohrkammer mit ihrem offenen Endbereich aufwärts weist, auch ohne eine Luftströmung - reine Schwerkrafteinwirkung - durchgeführt werden.

Sofern die Empfangsrohrkammern beider Rohrpoststationen über eine Zuleitung mit dem jeweils zugehörigen Fahrrohrstrangbereich verbunden sind, kann das für den Verbindungsverkehr heranzuziehenden Gebläse aus den beiden Fahrrohrsträngen zugeordneten Gebläsen ausgewählt werden. Damit besteht die Möglichkeit, die Verkehrsleistung der Anlage zu erhöhern, da jeweils das Gebläse des Fahrrohrstranges eingesetzt werden kann, in dem momentan kein anderer Lienienverkehr stattfindet. Dies is insbesondere dann zu Vorteil, wenn die Verbindungsleitung zwischen zwei Rohrpoststationen sehr lang ist. Die Empfangsrohrkammern können in einem solchen Fall mit einer Sperrvorrichtung ausgestattet werden sein, die eine über die Verbindungsleitung aufgenommene empfangene Rohrpostbüchse so lange mekanisch arretieren, bis die Empfangsrohrkammern in die Flucht des der Station zugeordneten Fahrrohres eingefahren wird. Das Lösen der Sperrvorrichtung kann dabei aus der Verschiebbewegung des Tragkörpers abgeleitet werden.

Um eine völlige Freizügigkeit für den Verbindungsverkehr zu ermöglichen, sieht eine vorteilhafte Weiterbildung der Erfindung vor, daß das Ventil als Dreiwegeventil ausgebildet ist, das die Empfangsrohrkammer wahlweise mit dem Fahrrohrstrangbereich oder Außenluft verbindet.

Auch für die Realisierung der zumindest einen Teilbereich der Empfangsrohrkammer einbeziehenden Luftströmung sind unterschiedliche Lösungen möglich. Beispielsweise ist die Sperrvorrichtung durch eine im Sinne des Aufbaus eines eine ankommenden Rohrpostbüchse abbremsenden Luftpolsters wirkenden Verschluß der Empfangsrohrkammer gebildet und zweigt von der Empfangsrohrkammer ein Luftleitkanal ab, der bei mit dem Rohrstutzen fluchtender Lage in die Zuleitung einmündet. Sofern die übrigen Rohrpoststationen der Rohrpostanlage ebenfalls eine pneumatische Bremsung ankommender Rohrpostbüchsen vorsehen, ist eine pneumatische Bremsung der für den Übergabeverkehr bestimmten Rohrpostbüchsen ebenfalls als vorteilhaft anzusehen. Möglich ist aber auch, den Übergabeverkehr ohne pneumatische Bremsung durchzuführen und die Rohrpoststationen der Verbindungseinrichtungen vorzu großen dynamischen Belastungen dadurch zu bewahren, daß für die Übergabe zwischen zwei Fahrrohrsträngen bestimmte Rohrpostbüchsen mit geringeren Geschwindigkeiten befördert werden. Derartige Rohrpoststationen der Verbindungseinrichtungen ohne pneumatische Bremsung ankommender Rohrpostbüchsen können dabei vorzugsweise derart realisiert sein, daß die Sperrvorrichtung durch einen Anschlagspuffer mit Luftdurchtrittsöffnung gebildet ist. Zweckmäßigerweise wird dabei der Anschlag mit einem aufschlagdämpfenden Material versehen.

Eine bezüglich der notwendigen Abmessungen der Rohrpoststationen besonders günstige Realisierung des Luftleitkanals besteht darin, daß der Luftleitkanal seitlich aus der Empfangsrohrkammer austritt und in dem die Sperrvorrichtung aufweisenden Endbereich der Empfahngsrohrkammer zumindest im Bereich seiner lichten Öffnung fluchtend zur Empfangsrohrkammer verläuft. Wird die Empfangsrohrkammer in die Flucht des Fahrrohrstranges eingefahren, so verläuft die Luftströmung durch den Eingangsbereich der Empfangsrohrkammer in den Luftleitkanal und tritt aus dessen lichter Öffnung in den an der anderen Seite eines Stationsgehäuses angeschlossenen fluchtenden Fahrrohrstrangabschnitt ein. Befindet sich dagegen die Empfangsrohrkammer in ihrer mit dem Rohrstutzen fluchtenden Lage, so steht die lichte Öffnung des Luftleitkanals vor einer Öffnung im Stationsgehäuse, die entweder mit Außenluft oder mit der an den Fahrrohrstrang führenden Zuleitung verbunden ist. Durch diese Zugang des Luftleitkanals zur Außenluft bzw. zur Zuleitung kann ein reibungsloser Übergangsverkehr gewährleistet werden.

Eine fertigungstechnisch besonders günstige Realisierung der Rohrpoststationen ergibt sich gemäß einer vorteilhaften Weiterbildung der Erfindung dadurch, daß die Rohrhülse und die Empfangsrohrkammer in einem gemeinsamen Tragkörper angeordnet sind, der zumindest im Randbereich der offenen Enden der Rohrhülse und der Empfangsrohrkammer parallel zu den benachbarten Begrenzungswänden eines Stationsgehäuses ausgerichtete Stirnflächen aufweist. Diese Ausgestaltung eröffnet insbesondere vorteilhafte Möglichkeiten der notwendigen Abdichtungen der Anschlüsse des Fahrrohrstranges an eine Rohrpoststation von den Öffnungen zur Zuleitung bzw. zum Verbindungsrohr im gleichen Stationsgehäuse. Eine weiter Ausgestaltung der Erfindung sieht in diesem Zusammenhang vor, daß an den Begrenzungswänden fluchtende Rohranschlüsse des jeweiligen Fahrrohrstranges umgreifende Dichtringe angeordnet sind. Eine einwandfreie Abdichtung, die lange Lebensdauer mit einwandfreien Betriebsbedingungen kombiniert, wird dadurch erzielt, daß ringförmige Nuten in den Begrenzungswänden die federnd gelagert und/oder ausgebildet an die Stirnflächen des Tragkörpers angedrückten Dichtringe aufnehmen.

Als besonders vorteilhaft ist es anzusehen, daß die beiden Rohrpoststationen jeder Verbindungseinrichtung identisch ausgebildet sind; damit ist nur eine einzige Bauform für die Rohrpoststationen notwendig.

Als besonders vorteilhaft ist anzusehen, die Rohrpoststationen der Verbindungseinrichtung derart auszubilden, daß sie den nicht dem Verbindungsverkehr dienenden übrigen Rohrpoststationen der einzelnen Fahrrohrstränge möglichst weitgehend entsprechen, d.h. durch möglichst geringfügige Modifikationen aus diesen entwickelt sind. Derartige Rohrpoststationen sind beispielsweise in der deutschen Patentanmeldung 31 02 248 beschrieben.

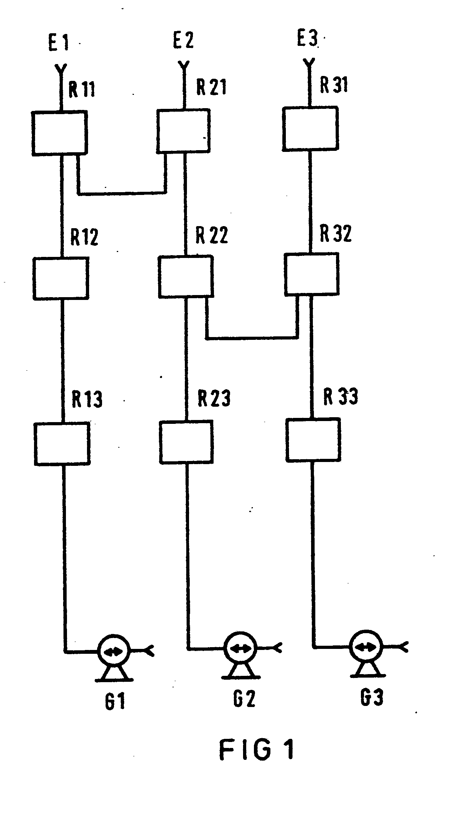

Die Erfindung wird im folgenden anhand eines in drei Figuren dargestellten Ausführungsbeispiels beschrieben. Die Figur 1 zeigt ein Anlagenschema mit mehreren im Einrohr-Wendebetrieb befahrenen Fahrrohrsträngen und mehreren Verbindungseinrichtungen zur wahlweisen Überleitung von Rohrpostbüchsen aus einem der Fahrrohrstränge in den anderen.

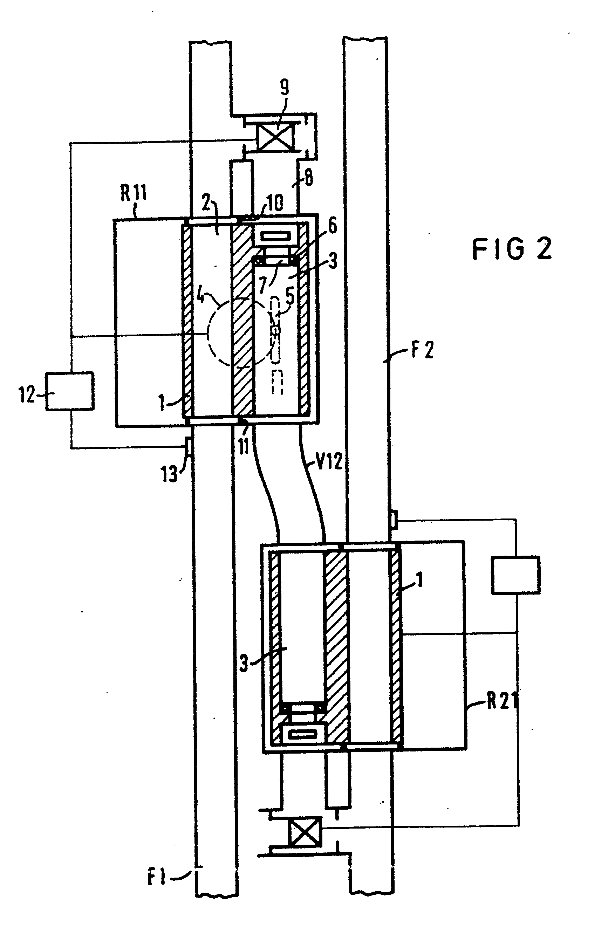

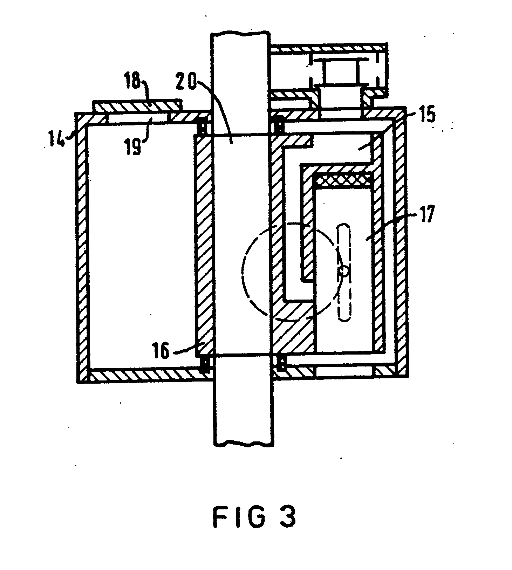

In der Figur 2 sind zwei eine Verbindungseinrichtung bildende Rohrpoststationen dargestellt; während Figur 3 eine andere Ausführungsform einer in eine Verbidnungseinrichtung eingefügten Rohrpoststaion zeigt.

Die in Figur 1 dargestellte Rohrpostanlage weist drei jeweils im Einrohr-Wendebetrieb befahrene Fahrrohrstränge F1, F2, F3 auf, die jeweils mit einem eigenen Gebläse G1, G2, G3 versorgt sind und jeweils dreit Stationen R11, R12, R13, R21, R22, R23, R31, R32, R33 aufweisen. Dabei bilden die Rohrpoststationen R11 und R21 eine Verbindungseinrichtung für den Übergabeverkehr zwischen den Fahrrohrsträngen F1 und F2; die Rohrpoststationen R22 und R32 bilden eine Verbindungseinrichtung für den Übergabeverkehr zwischen den Fahrrohrsträngen F2 und F3. Der Übergabeverkehr zwischen den Fahrrohrstränge F1 und F3 erfolgt nicht direkt, sondern unter Einbeziehung der beiden definierten Verbindungseinrichtungen; eine aus dem Fahrrohrstrang F1 in den Fahrrohrstrang F3 zu überführende Rohrpostbüchse durchläuft also die Rohrpoststationen R11, R21, R22 und R32.

Bei den beiden in der Figur 2 dargestellten Rohrpoststationen möge es sich beispielsweise um die Rohrpoststationen R11 und R22 der Figur 1 handeln. Die aus den beiden Rohrpoststationen R11, R21 gebildete Verbindungseinrichtung dient damit der Übergabe von Rohrpostbüchsen zwischen den Fahrrohrsträngen F1 und F2.

Jede der beiden Rohrpoststationen R11, R21 weist einen horizontal verschiebbaren Tragkörper 1 auf, in dem eine beidseitig offene Rohrhülse 2 und eine Empfangsrohrkammer 3 gebildet sind. Der Antrieb des Tragkörpers 1 erfolgt über eine gestrichelt angedeutete Kurbelschwinge 4, die in eine am Tragkörper 1 angeordnete Geradführung 5 eingreift. Der Endbereich der Empfangsrohrkammer 3 ist mit einem elastischen Puffer 6 abgeschlossen, der in seinem Mittelbereich eine Luftdurchtrittsöffnung 7 bildet, die in der dargestellten Stellung der Empfangsrohrkammer 3 mit einer Zuleitung 8 fluchtet. In die Zuleitung 8 ist ein 3-Wege-Ventil 9 eingefügt, das wahlweise den Zugang der Zuleitung 8 zum Fahrrohrstrang F1 oder zu Außenluft herstellt.

In der dargestellten Lage der Tragkörper 1 der beiden Rohrpoststationen R11, R21 sind beide Fahrrohrstränge F1, F2 nicht auf Übergabeverkehr eingerichtet, d. h., daß im Bereich der Rohrpostenstationen R11, R21 ankommende Rohrpostbüchsen unbehindert durch die Rohrpoststationen R11, R21 hindurchfahren. Einwandfreie pneumatische Verhältnisse werden dabei durch Dichtringe 10, 11 erzielt, die an den Stirnflächen des Tragkörpers 1 anliegen. Eine Steuereinrichtung 12 für die Kurbelschwinge 4 und das 3-Wege-Ventil 9 wird durch eine nicht dargestellte Anlagensteuerung und einen von vorbeifahrenden Rohrpostbüchsen betätigbaren Fahrschalter 13 beeinflußt. Zur Übernahme einer Rohrpostbüchse vom Fahrrohrstrang F1 in der Fahrrohrstrang F2 wird zunächst der Tragkörper 1 der Rohrpoststation R11 derart verschoben, daß die Empfangsrohrkammer 3 in eine fluchtende Lage zum Fahrrohrstrang F1 gebracht wird. Eine von unten in Richtung der Rohrpoststation R11 fahrende Rohrpostbüchse wird dabei durch den durch die Luftzutrittsöffnung 7 aufrechterhaltenen Luftstrom bis in die Empfangsrohrkammer 3 heinbefördert und verbleibt in dieser Lage, während der nachfolgende Verfahrbewegung des Tragkörpers 1 der Rohrpoststation R21 in den Fahrrohrstrang F2 eingeschleust werden.

Die in der Figur 3 dargestellte Rohrpoststation 14 unterscheidet sich von den Rohrpoststationen der Figur 2 im wesentlichen durch die Ausbildung eines Luftleitkanals 15 innerhalb eines Tragkörpers 16. Diese Ausbildung ermöglicht die pneumatische Bremsung von in einer Empfangsrohrkammer 17 zu empfangenden Rohrpostbüchsen. Durch eine Abdeckung 18 über einer Öffnung 19 im Gehäuse der Rohrpoststation 14 ist angedeutet, daß die Rohrpoststation 14 in ihrer Grundausführung zugleich als Rohrpoststation zum Senden, Empfangen und Passierenlassen von Rohrpostbüchsen ausgebildet ist. Durch die Öffnung 18 werden bei Einsatz einer derartigen Rohrpoststation als Sendestation Rohrpostbüchsen eingeführt, die von einer gemeinsam mit der Empfangsrohrkammer 17 im Tragkörper 16 angeordneten Rohrhülsen 20 übernommen werden.

**Patentansprüche**

1. Rohrpostanlage mit mehreren im Einrohr-Wendebetrieb befahrenen Fahrrohrsträngen (F1, F2) und der wahlweisen Verbindung jeweils zweier Fahrrohrstränge (F1, F2) dienenden Verbindungseinrichtungen mit jeweils zwei mit einer beidseitig offenen lageveränderbaren Rohrhülse (2) fluchtend in jeweils einen der beiden Fahrrohrstränge (F1, F2) eingefügten Rohrpoststationen (R11, R21), deren Rohrhülse (2) jeweils mit einer parallel zu ihr ausgerichteten Rohrempfangskammer (3) mechanisch verbunden ist, die zur Aufnahme einer überführten Rohrpostbüchse in die Flucht eines Rohrstutzens und zur Einschleusung dieser Rohrpostbüchse in den entsprechenden Fahrrohrstrang (F1) in die Flucht desselben einfahrbar ist, dadurch gekennzeichnet, daß die beiden Rohrstutzen der einander zugeordneten Rohrpoststationen (R11, R21) mittels eines Verbindungsrohres (V12) miteinander verbunden sind, daß die Rohrempfangskammer (3) in ihrem vom Rohrstutzen abgewandten Endbereich eine Sperrvorrichtung (6) aufweist, daß die Rohrempfangskammer (3) wenigstens einer der beiden einander zugeordneten Rohrpoststationen (R11, R21) mittels einer ein schaltbares Ventil (9) aufweisenden Zuleitung (8) mit dem zugehörigen Fahrrohrstrang (F1) verbindbar ist und daß zur Überleitung bestimmte Rohrpostbüchsen nach

Einfahren der Rohrempfängskammer (3) in die Flucht des Fahrrohrstranges (F1) mittels einer zumindest einen Teilbereich der Rohrempfangskammer (3) einbeziehenden Luftströmung an die Sperrvorrichtung (6) herangeführt, sowie nach Rückkehr der Rohrempfangskammer (3) in ihre Ausgangslage in das Verbindungsrohr (V12) überführt werden.

2. Rohrpostanlage nach Anspruch 1, dadurch gekennzeichnet, daß das Ventil (9) als 3-Wege-Ventil ausgebildet ist, das die Rohrempfangskammer (3) wahlweise mit dem Fahrrohrstrang (F1) oder Außenluft verbindet.

3. Rohrpostanlage nach Anspruch 2, dadurch gekennzeichnet, daß die Sperrvorrichtung durch einen im Sinne des Aufbaus eines eine ankommende Rohrpostbüchse abbremsenden Luftpolsters wirkenden Verschluß der Empfangsrohrkammer (17) gebildet ist und daß von der Empfangsrohrkammer (17) ein Luftleitkanal (15) abzweigt, der bei mit dem Rohrstutzen fluchtender Lage in die Zuleitung einmündet.

4. Rohrpostanlage nach Anspruch 3, dadurch gekennzeichnet, daß der Luftleitkanal (15) seitlich aus der Empfangsrohrkammer (17) austritt und in dem die Sperrvorrichtung aufweisenden Endbereich der Empfangsrohrkammer (17) zumindest im Bereich seiner lichten Öffnung fluchtend zur Empfangsrohrkammer (17) verläuft.

5. Rohrpostanlage nach Anspruch 2, dadurch gekennzeichnet, daß die Sperrvorrichtung durch einen Anschlag (6) mit Luftdurchtrittsöffnung (7) gebildet ist.

6. Rohrpostanlage nach einem der Ansprüche 1 bis 5, dadurch gekennzeichnet, daß die Rohrhülse (2) und die Empfangsrohrkammer (3) in einem gemeinsamen Tragkörper (1) angeordnet sind, der zumindest im Randbreich der offenen Enden der Rohrhülse (2) und der Empfangsrohrkammer (3) parallel zu den benachbarten Begrenzungswänden eines Stationsgehäuses ausgerichtete Stirnflächen aufweist.

7. Rohrpostanlage nach Anspruch 6, dadurch gekennzeichnet, daß der Tragkörper (1) eine Geradführung (5) aufweist, in die ein an der Kurbelscheibe (4) eines Kurbeltriebs befestigter Mitnehmer eingreift.

8. Rohrpostanlage nach Anspruch 6 oder 7, dadurch gekennzeighnet, daß an den Begrenzungswänden fluchtende Rohranschlüsse des jeweiligen Fahrrohrstranges (F1) umgreifende Dichtringe (10, 11) angeordnet sind.

9. Rohrpostanlage nach Anspruch 8, dadurch gekennzeichnet, daß ringförmige Nuten in den Begrenzungswänden die federnd gelagert und/oder ausgebildet an die Stirnflächen des Tragkörpers (1) angedrückten Dichtringe (10, 11) aufnehmen.

10. Rohrpostanlage nach einem der Anprüche 1 bis 9, dadurch gekennzeichnet, daß die beiden Rohrpoststationen (R11, R21) jeder Verbindungseinrichtung identisch ausgebildet sind.

**Claims**

1. A pneumatic tube conveyor comprising a plurality of pneumatic tube lines (F1, F2) which are travelled in single-tube operation, and connecting installations which serve for the selective connection of two pneumatic tube lines (F1, F2) and which in each case have two pneumatic tube stations (R11, R21) which are respectively inserted into one of the two pneumatic tube lines (F1, F2) aligned with a tube sleeve (2) which is open at both ends and can change its position, and the tube sleeves (2) of which stations are respectively mechanically connected to tube receiving chambers (3) which are aligned parallel thereto and which in order to accommodate a transferred pneumatic dispatch carrier can be displaced into alignment with a tube connector and in order to charge said pneumatic dispatch carrier into the corresponding pneumatic tube line (F1) can be displaced into alignment with the latter, characterised in that the two tube connectors of the mutually assigned pneumatic tube stations (R11, R21) are connected to one another by means of a connecting tube (V12); that at its end region facing away from the tube connector, the tube receiving chamber (3) has a blocking device (6); that the tube receiving chamber (3) of at least one of the two mutually assigned pneumatic tube stations (R11, R21) can be connected to the assigned pneumatic tube line (F1) by means of a supply line (8) having a switchable valve (8); and that for transfer, following the displacement of the tube receiving chamber (3) into alignment with the pneumatic tube line (F1), specific pneumatic dispatch carriers are led to the blocking device (6) by means of an air stream which at least involves a part of the tube receiving chamber (3), and are transferred into the connection tube (V12) when the tube receiving chamber (3) has returned into its initial position.

2. A pneumatic tube conveyor as claimed in Claim 1, characterised in that the valve (8) is in the form of a three-way valve which selectively connects the tube receiving chamber (3) to the pneumatic tube line (F1) or the outer atmosphere.

3. A pneumatic tube conveyor as claimed in Claim 2, characterised in that the blocking device is formed by a closure of the receiving tube chamber (17) which acts as an air cushion which slows down an incoming pneumatic dispatch carrier, and that an air-conducting channel (15) which opens into the supply line in the position which is in alignment with the tube connector, branches off from the receiving tube chamber (17).

4. A pneumatic tube conveyor as claimed in Claim 3, characterised in that the air-conducting channel (15) leaves the receiving tube chamber (17) laterally and in the end region of the receiving tube chamber (17), which end region comprises the blocking device, extends so as to be in alignment with the receiving tube chamber (17), at least in the region of its inner opening.

5. A pneumatic tube conveyor as claimed in

Claim 2, <u>characterised in</u> that the blocking device is formed by a stop (6) with an air passage (7).

6. A pneumatic tube conveyor as claimed in one of Claims 1 to 5, <u>characterised in</u> that the tube sleeve (2) and the receiving tube chamber (3) are arranged in a common supporting body (1) which at least in the boundary region of the open ends of the tube sleeve (2) and the receiving tube chamber (3) has end faces which are parallel to the adjacent boundary walls of a station housing.

7. A pneumatic tube conveyor as claimed in Claim 6, <u>characterised in</u> that the supporting body (1) has a guide (5) into which a carrier engages which is secured to the crank disc (4) of a crank gear.

8. A pneuamtic tube conveyor as claimed in Claim 6 or Claim 7, <u>characterised in</u> that sealing rings (10, 11) which surround aligned tube connectors of the respective pneumatic tube line (F1), are arranged at the boundary walls.

9. A pneumatic tube conveyor as claimed in Claim 8, <u>characterised in</u> that annular grooves in the boundary walls accommodate sealing rings (10, 11) which are pressed against the end faces of the supporting body (1) so as to be resiliently positioned and/or constructed.

10. A pneumatic tube conveyor as claimed in one of Claims 1 to 8, <u>characterised in</u> that the two pneumatic tube stations (R11, R21) of each connecting installation are identical.

**Revendications**

1. Installation de transport pneumatique de documents, comprenant plusieurs lignes navettes (F1, F2), utilisant le même tube dans les deux sens, et des dispositifs de liaison pour la liaison sélective de chaque fois deux lignes (F1, F2), chaque dispositif de liaison comportant deux postes (R11, R21) intercalés chacun par une section de tube ou douille (2) en alignement avec une des deux lignes (F1, F2) dans l'une de ces lignes, la douille (2) de chaque poste étant ouverte des deux côtés, déplaçable et reliée mécaniquement à une chambre de réception de tube (3) alignée parallèlement à elle, qui peut être mise dans l'alignement avec une tubulure pour la réception d'une cartouche transférée et peut être mise dans l'alignement avec une ligne (F1) pour l'éclusage de la cartouche dans cette ligne, caractérisée en ce que les deux tubulures des postes (R11, R21) coordonnés l'un à l'autre sont reliées ensemble par un tube de liaison (V12), que la chambre de réception (3) présente un dispositif d'arrêt (6) dans sa région terminale éloignée de la tubulure, que la chambre de réception (3) d'au moins l'un des deux postes (R11, R21) coordonnés l'un à l'autre peut être reliée à la ligne (F1) correspondante par une canalisation d'amenée (8) présentant une vanne commutable (9) et que des cartouches destinées à être transférées, après mise de la chambre de réception (3) dans l'alignement de la ligne (F1), sont amenées jusqu'au dispositif d'arrêt (6) et sont transférées dans le tube de liaison (V12), après le retour de la chambre de réception (3) à sa position de départ, au moyen d'un courant d'air passant par une partie au moins de la chambre de réception (3).

2. Installation selon la revendication 1, caractérisée en ce que la vanne (9) est réalisée comme une vanne à trois voies qui relie la chambre de réception (3) sélectivement à la ligne (F1) ou à l'air extérieur.

3. Installation selon la revendication 2, caractérisée en ce que le dispositif d'arrêt est formé par une fermeture de la chambre de réception (3) agissant dans le sens de l'établissement d'un coussin d'air freinant une cartouche arrivante et en ce qu'un canal d'envoi d'air (15) part de la chambre de réception (17) et débouche dans la canalisation d'amenée dans la position d'alignement avec la tubulure.

4. Installation selon la revendication 3, caractérisée en ce que le canal d'envoi d'air (15) sort latéralement de la chambre de réception (17) et s'étend, dans la région terminale présentant le dispositif d'arrêt de la chambre de réception, en alignement avec cette chambre, tout au moins dans la zone de son ouverture libre.

5. Installation selon la revendication 2, caractérisée en ce que le dispositif d'arrêt est formé par une butée (6) présentant une ouverture de passage d'air (7).

6. Installation selon une des revendications 1 à 5, caractérisée en ce que la douille (2) et la chambre de réception (3) sont disposées dans un corps porteur (1) commun qui possède, tout au moins dans la zone du bord des extrémités ouvertes de la douille (2) et de la chambre de réception (3), des faces extrêmes orientées parallèlement aux parois de délimitation voisines d'un coffret de poste.

7. Installation selon la revendication 6, caractérisée en ce que le corps porteur (1) présente une glissière (5) dans laquelle pénètre un élément d'entraînement fixé sur le flasque de manivelle (4) d'un mécanisme à manivelle.

8. Installation selon la revendication 6 ou 7, caractérisée en ce que des joints d'étanchéité annulaires (10, 11) sont disposés sur les parois de délimitation autour de raccordements de tube, alignés, de la ligne (F1) concernée.

9. Installation selon la revendication 8, caractérisée en ce que des gorges annulaires ménagées dans les parois de délimitation reçoivent les joints d'étanchéité annulaires (10, 11), montés et/ou réalisés élastiquement et pressés contre les faces extrêmes du corps porteur (1).

10. Installation selon une des revendications 1 à 9, caractérisée en ce que les deux postes (R11, R21) de chaque dispositif de liaison sont de conformation identique.

FIG 1

FIG 2

FIG 3